# EUROPEAN PATENT SPECIFICATION

(11) **EP 3 365 206 B1**
(45) Date of publication and mention of the grant of the patent: **03.03.2021**
(21) Application number: 16784509.8
(22) Date of filing: 20.10.2016
(51) Int. Cl.: B60T 13/22

(54) **A HYDRAULIC BRAKE ACTUATOR**
EIN HYDRAULISCHER BREMSAKTOR
VÉRIN POUR FREIN HYDRAULIQUE

(30) Priority: 21.10.2015 IT UB20155283
(43) Date of publication of application: 29.08.2018
(73) Proprietor: CNH Industrial Italia S.P.A., 10135 Turin (IT)
(72) Inventor: CIARROCCHI, Marco Pietro, 64027 Sant'Omero (TE) (IT); VESCOVINI, Maurizio, 41012 Carpi (MO) (IT)
(74) Representative: CNH Industrial IP Department
(86) International application number: PCT/EP2016/075297
(87) International publication number: WO 2017/068084

(56) References cited:
- EP-A1- 2 853 489
- EP-A1- 2 982 555
- US-A- 1 974 197
- US-A- 2 017 950

## Description

The invention relates to a hydraulic brake actuator.

Brake actuator mechanisms have been known since the earliest days of land-based vehicular transport. At their simplest they include a pivotable foot pedal or brake lever that is moved by a vehicle operator from a brake-off position, towards which it biased by e.g. a spring, to a brake-on position. In the latter position a brake shoe, pad or wedge is forced by further components connected to the pedal or lever into engagement with a moving part that is required to be braked.

Simple rod linkages that were used as the further components in horse-drawn coaches and early designs of motor vehicle have been superseded in recent decades by electric, hydraulic, electro-hydraulic or pneumatic braking systems. These provide superior, more reliable braking performance than mechanical linkages.

In large vehicles such as tractors, combine and other harvesters, excavators, loaders, dump trucks, some military vehicles and some types of goods vehicles there is a requirement for a parking brake to apply automatically in the event of failure of a source of power that powers a hydraulic pump forming part of a hydraulic braking circuit. EP2853489A1, for example, describes a dual pressure brake actuator for vertical lift aircraft aimed at engaging or disengaging a brake. Whereas EP2982555, which is a prior art according to Article 54(3) of the European Patent Convention, discloses a vehicle park brake which is operable both by an electric means and a manually operable means and whereby the manually operable means overrides the control of the brake by the electric means.

Typically such an arrangement operates on the basis of the brake shoe or pad of the parking brake being spring biased towards a brake-on position. The hydraulic circuit opposes the biasing of the brake shoe or pad during normal movement of the vehicle, in order to hold the brake in an off position. In the event of failure of the power source supplying the pump (or in the event of failure of the pump itself) the hydraulic force reduces with the result that biasing of the pad or shoe to the brake-on position occurs. This situation is referred to herein as power failure brake activation; and the type of braking system described is known in the art as a spring activated hydraulic release or SAHR brake.

In some vehicle designs such as those listed however it is additionally required to be able to pressurise the hydraulic circuit of an SAHR brake in the event of a power failure, in order to deactivate the parking brake. An example of when this is needed is when a vehicle breaks down in an inconvenient or dangerous location, and must be driven or towed away. At such a time the action of an automatically applied parking brake of the kind described above is a disadvantage because it prevents ready movement of the unpowered vehicle.

For this reason it is known to provide a pump that is manually operable for the purpose of creating sufficient hydraulic pressure in a brake cylinder as to cause release of a parking brake. The presence of the manually operable pump means that additional control components are required to be fitted within the cab of the vehicle. The occurrence of a need to pump the brake to an off position is referred to herein as power failure brake deactivation.

According to the invention in a first aspect there is provided a hydraulic brake actuator comprising a manual control member and a moveable valve member, wherein the manual control member is moveable between on the one hand a control member neutral position and a control member-defined brake activation position and on the other hand the control member neutral position and a control member-defined brake deactivation position, the manual control member being operatively connected to a brake control valve a moveable valve member of which is moveable between on the one hand a valve neutral position and a brake activation position and on the other hand the valve neutral position and a brake deactivation position. The manual control member being in the control member neutral position may correspond to the moveable valve member being in the valve neutral position, wherein the manual control member is a pivotable lever that is pivotably secured at one end to a pivot (41) forming part of a vehicle; and that defines a free end that is capable of being manually gripped,and wherein the pivotable lever is pivotable relative to a cam plate (56) defining a cam surface; and wherein the pivotable lever includes a cam follower that is moveable relative to the lever and that follows the cam surface
characterised in that the cam surface includes one or more slots formed in the cam plate; and the pivotable lever includes a resiliently deformable biasser that biases the follower into engagement with the cam surface.

An arrangement in accordance with the broad form of the invention as described advantageously combines the functions of a parking brake actuator and a manually operable pump actuator in one and the same control member. This in turn minimises the number of control elements required in a vehicle cab, advantageously saving on space, cost and system complexity. In particular movement of the control member between the neutral position and the control member-defined brake activation position causes actuation of the brake; and movement of the control member between the neutral position and the control member-defined brake deactivation position causes operation of a pump of the kind described above that is connected to the brake control valve. In the neutral position of the control member the brake operates according to movement of other control components that are connected in order to control the brake at times other than the power failure brake activation and deactivation situations described above. Such arrangement permits retention of the control member in the neutral position until it is required to move it to the control lever-defined brake activation position or the control lever-defined brake deactivation position.

Preferably the hydraulic brake actuator includes a link member operatively interconnecting the manual control member and the brake control valve. In particular the link member may be or include a Bowden cable, although other types of link member are possible within the scope of the invention. As examples only, alternative types of link member within the scope of the invention include but are not limited to cable types other than the Bowden cable design, rigid members such as rods, hydraulic link circuits of a kind that are known to the person of skill in the art, and electronically controlled mimic arrangements that replicate movement of the control member in another part of a braking arrangement in which the brake actuator of the invention is connected.

Preferably the control member is a pivotable lever that is pivotably secured at one end to a pivot forming part of a vehicle; and that defines a free end that is capable of being manually gripped. In particular in preferred embodiments of the invention the control member in essence adopts the design of a conventional vehicle brake lever or brake handle.

Conveniently the recess is part-way along the cam surface, movement of the follower along the cam surface to a first side of the recess defining movement of the control member between the control member neutral position and a control member-defined brake activation position; and movement of the follower along the cam surface to a second side of the recess defining movement of the control member between the control member neutral position and a control member-defined brake deactivation position. This arrangement confers an advantageously intuitive movement on the control member. Thus for example pulling the control member from the neutral position in an upward direction, in the conventional manner of applying a vehicle brake using a brake lever or handle, can result in the application of the vehicle brake; and movement of the control member in an opposite, downward direction can cause operation of the pump to deactivate the brake.

Preferably the length of movement of the cam follower along the cam surface to the said first side is approximately 14 mm; and movement of the cam follower along the cam surface to the said second side is approximately 34 mm. Thus the movement that results in application of the SAHR brake is relatively short, permitting rapid application of the brake when required; and the stroke of the control member in the opposite direction that results in operation of the pump to deactivate the brake is relatively long so that the pumping action is efficient. It will be appreciated that the length of the pump stroke will be dependent on the dimensions of the brake actuator and other working parameters.

Further preferably at least one said recess is defined by a space between protrusions protruding from the cam surface. Other means of defining the recess however are possible within the scope of the invention.

In a preferred embodiment of the invention the pivotable lever includes a manually operated release for causing removal of the cam follower from a said recess and that acts in opposition to the biasser, when the latter is present.

Optionally the pivot is formed in the cam plate. This makes for an advantageously compact, robust arrangement that can be manufactured as a unit ready for installation in a vehicle.

Preferably movement of the valve member of the control valve between the neutral position and the brake deactivation position if effected repeatedly pumps hydraulic fluid in order to deactivate a brake that is operatively connected to the brake control valve.

The invention is also considered to reside in a brake actuator as defined herein when installed in and operatively connected to a SAHR brake arrangement of a vehicle.

There now follows a description of preferred embodiments of the invention, by way of non-limiting example, with reference being made to the accompanying drawings in which:
Figure 1 is a schematic representation of an existing SAHR brake circuit.
Figure 2 shows one form of manual control member forming part of apparatus according to the invention;
Figure 3 shows an enlargement of part of Figure 2, as signified by the letter A;
Figure 4 shows in schematic form one SAHR brake circuit including apparatus according to the invention;
Figure 5 shows in schematic form a brake control valve in a brake activation position in a SAHR brake circuit;
Figure 6 is a perspective view showing the internal structure of the brake valve in the brake activation position;
Figure 7A is a front view of the brake valve of Figure 6;
Figure 7B shows an enlargement of part of Figure 7A;
Figure 8A shows in cross-sectional view a brake control valve in a brake activation position when connected to activate a SAHR brake;
Figure 8B shows in schematic form the brake control valve of Figure 8A in a SAHR brake circuit;
Figure 9 shows in schematic form a brake control valve in a neutral position in a SAHR brake circuit;
Figure 10A shows in cross-sectional view a brake valve in a neutral position;
Figure 10B is a schematic representation of the valve of Figure 10A;
Figure 11 shows in schematic form a brake control valve in a brake deactivation position in a SAHR brake circuit;
Figure 12 shows a variant on the Figure 4 circuit.

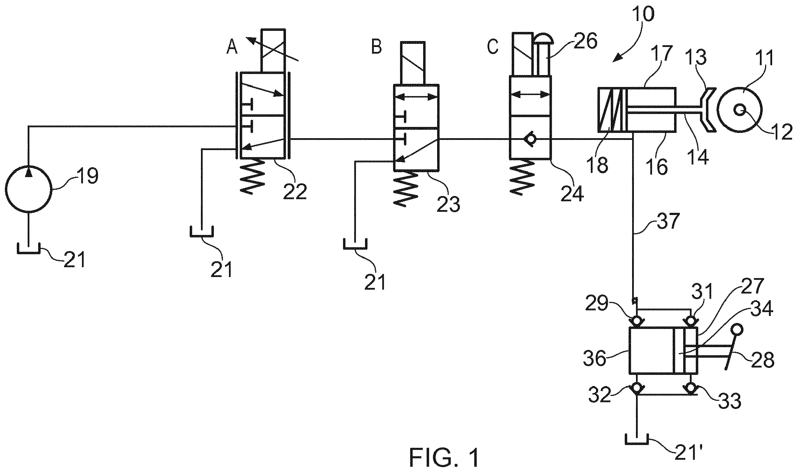

Referring to the drawings, Figure 1 shows a circuit 10 of a SAHR brake.

In Figure 1 a first brake element 11 in the form of a brake disc is attached to a rotatable part of a vehicle drive train such as an axle 12 so as to rotate therewith. A second brake element 13 in the form of a brake shoe is moveable on a rod 14 that is attached to a piston 16. Piston 16 is secured so as to be sealingly slidably moveable inside a brake cylinder 17 such that hydraulic fluid pressure acting on the face of piston 16 lying remote from second brake element 13 drives the second brake element 13 into braking engagement with the first brake element 11.

A spring 18 acting inside the cylinder 17 on the face of piston 16 nearest to brake element 13 opposes the action of hydraulic or other fluid in the manner described with the result that in the absence of fluid pressure, or when the force exerted by the fluid pressure is less than that exerted in the opposite direction by the spring 18, the brake becomes engaged such that the axle 12 is inhibited from rotating.

A powered pump 19 connected to a tank 21 or other source of fluid pressurises the fluid in the cylinder 17. Pump 19 supplies the pressurised fluid via a series of in-line connected control valves 22, 23, 24. Pump may be an electric pump or may draw rotary power from a powered shaft of the engine of the vehicle in which the SAHR brake is installed.

The valve 22 is a spring-biased, solenoid actuated proportional valve that may be progressively altered between the biased position shown, in which the pump 19 is disconnected from the cylinder 17 and fluid is exhausted from the circuit to the tank 21 (or, in some arrangements, to another tank) on the one hand; and a connected position in which the pump 19 is connected to supply the remainder of the circuit on the other.

Valve 23 is a spring-biased two-position valve that in the biased position shown connects the circuit to the drain 21 (or, if appropriate, to another drain or tank). When actuated the valve 23 connects the pump to supply pressurised fluid to the cylinder 17.

The effect of the presence of the two valves 22, 23 is to provide two forms of switching control of the SAHR brake during use of the vehicle in which it is installed. Control of the valve 22 gives rise to the gradual application of the SAHR brake 10; and actuation of the valve 23 gives rise to immediate switching between fully off and fully on conditions. Control apparatus such as one or more programmable devices may be included in the vehicle in order to provide for control of the valves in accordance with operational requirements.

Solenoid valve 24 is spring-biased to act as a one-way valve as shown. Actuation of the valve 24 by way of its integral solenoid converts it to a two-way valve that permits venting of pressurised fluid from the circuit. Thus if both of valves 22 and 23 are connected to the drain or tank 21 and valve 24 is energised hydraulic fluid is exhausted from cylinder 17 and the SAHR brake becomes engaged.

Since valve 24 is solenoid actuated however in the event of a power failure engagement of the SAHR brake is prevented because it is not possible for the cylinder 17 then to be connected to the drain or tank 21.

Valve 24 in view of this includes a manual override element 26 that may be operated by the driver of the vehicle in which the SAHR brake 10 is installed. Depression (or other actuation) of element 26 overrides the position of the solenoid of valve 24 with the result that even in the event of a failure of power supplying the valve 24 it may be moved to its two-way setting thereby permitting the draining of pressurised fluid from the cylinder 17 and engagement of the SAHR brake 10.

The circuit of Figure 1 also includes a manually operated fluid pump 27 having a cab-mounted lever 28 and an arrangement of one-way check valves 29, 31, 32, 33 in fluid outlet lines respectively on opposite sides of a moveable piston 34 that is capable of reciprocating under the influence of the handle 28 inside a further cylinder 36.

The arrangement of the one-way check valves is such that reciprocation of the lever 28 causes the pumping of fluid from a tank 21' that may or may not be the same as tank 21 described above. The outlet line 37 of the manually operated pump feeds the cylinder 17 on the same side as powered pump 19. Thus in the event of a power failure that prevents operation of the pump 19 the SAHR nonetheless may be disengaged (i.e. turned off) through use of the manually operated fluid pump to fill the cylinder 17 with pressurised fluid in opposition to the action of spring 18.

As noted the presence of the manual override element 26 and lever 28 complicates both the construction and the operation of the SAHR brake.

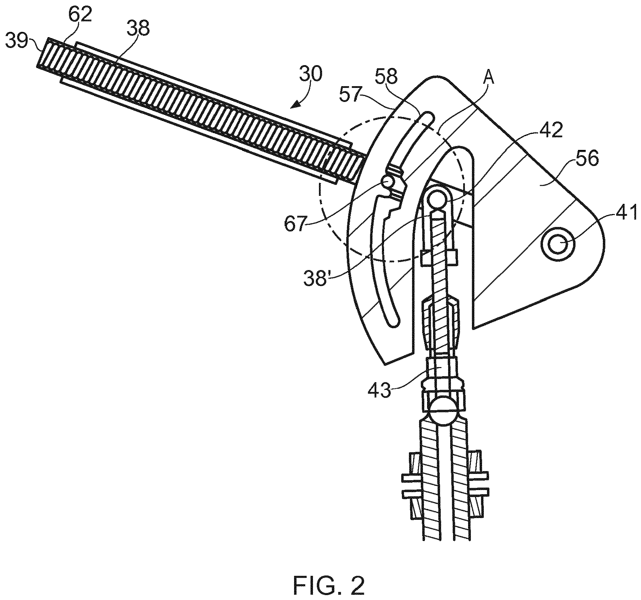

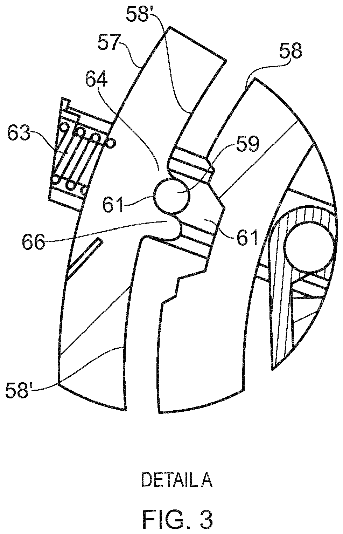

Figures 2 and 3 illustrate an arrangement the incorporation of which advantageously eliminates the need for two distinct control elements that cater for loss of power situations.

In Figure 2 a manual control member 30 combines, in accordance with the invention, the functions of the override element 26 and lever 28 in one and the same dual-purpose construction.

Manual control member 30 includes a handle 38 defining at one end a free end 39 that is dimensioned to be easily grasped by a vehicle driver and at the other end a pivot 41 by which the handle 38 is moveably secured relative to the remainder of the vehicle in which it is installed. In a typical installation the pivot 41 would be situated close to the floor of the cab of the vehicle, near to the driver's seat; but in other embodiments of the invention other locations (that need not be inside a driver cab) are possible. In the preferred embodiment shown the handle 38 is arranged to be pivotable about a horizontally extending axis, although in variants of the invention this need not necessarily be the case.

As a result of its pivoting mounting as described the handle 38 can be pivoted in an upwardly extending arc or a downwardly extending arc from a neutral position that is illustrated in Figure 2.

At a point part-way between free end 39 and pivot 41 an eyelet 42 connects the handle 38 via a pivot 38' to a Bowden cable 43, the nature of which is known per se to the person of skill in the art, such that arcuate motion of the handle 38 is converted into longitudinal movement of the Bowden cable 43.

At its end remote from handle 38 Bowden cable 43 is secured to the upper end of a spool 44 that is moveably captive in, and protrudes upwardly from, a bore extending longitudinally in a brake control valve 46. As will be described below, the spool 44 acts as a piston within the bore, with the bore providing the functionality of a cylinder for the piston.

Figure 3 shows in an enlargement of the region A of Figure 2 one arrangement, according to the invention, by means of which motion of the manual control member 30 may be constrained in a manner that produces a beneficial effect.

Figure 2 shows that pivot 41 is formed adjacent an apex of an approximately triangular rigid (e.g. metal) cam plate 56 that in a practical embodiment of the invention is fixed e.g. to the floor of a vehicle cab.

Manual control member 30 is hollow in the embodiment shown and extends from pivot 41 towards and beyond the side 57 of cam plate 56 that lies opposite pivot 41. In the embodiment visible in the drawings the side 57 is arcuate so as to present a smooth surface that is unlikely to injure a vehicle operator using the components described herein. Other shapes of the cam plate however are possible within the scope of the invention.

An arcuate slot 58 that is closed at each end perforates the cam plate 56 adjacent and essentially parallel to side 57. A cam follower in the form of a rod 59 protrudes from manual control member 30 via an elongate slot 61 formed therein a short distance towards free end 39 from eyelet 42. Rod 59 is moveable longitudinally relative to control member 30 and is pulled towards free end 39 by a resiliently deformable biasser (that in the preferred embodiment of the invention is a spring 63) that connects it inside the interior of control member 30 to free end 39.

As a result the rod is forced into sliding engagement with the edge 58' of arcuate slot 58 lying closest to side 57 and defining a cam surface such that on movement of manual control member 30 upwardly or downwardly the rod 59 follows the cam surface defined by edge 58' of slot 58.

Approximately a third of the way along its length measured from its uppermost extent surface 58' is formed with upper 64 and lower 66 protrusions that are spaced from one another so as to define a recess 67 therebetween.

At free end 39 control member 30 is formed as a protruding pushbutton 62 to which the spring 63 is secured. As noted the action of spring 63 is to force rod 59 into following engagement with surface (edge) 58' but depression of the pushbutton 62 causes extension of the spring 63 with the result that rod 59 is not pressed into engagement with surface 58', or at least is not pressed as firmly into engagement as at other times.

In consequence of this arrangement rod 58 may through depression of the pushbutton 62 and rotation of the control member 30 be caused to be received in the recess 67 or released therefrom as desired. This in turn means that the manual control member 30 may be locked in the position corresponding to receipt of the rod 58 in the recess 67 until such time as it is required to move the manual control member 30 in order to effect a control action as described below.

The position of the recess 67 corresponds to a neutral position of the manual control member and a spool 44 connected thereto as described below.

Protrusion 64 protrudes less than protrusion 66. As a consequence it is easier to effect movement of the manual control valve in an upward arc than a downward arc. This in turn reflects the fact that pulling on the manual control member 30 in order to initiate a braking action is likely to be more commonly required than depressing the manual control member 30 in order to effect manually pumped pressurising of the cylinder 17 and disengage the brake. The shape of protrusion 64 may be such that depression of pushbutton 62 is not required in order for the rod 58 to ride on it and into or out of the recess 67. The protrusion 66 preferably is such that depression of pushbutton 62 is always required in order to effect movement of rod 58 into and out of recess 67 via protrusion 66. This can provide an advantage in terms of safety because it may be less likely that the brake is released by mistake.

More than one recess, that need not necessarily adopt the design of recess 67, may be provided in other embodiments of the invention. Other detents than a recess formed in the cam surface 58' are also possible within the scope of the invention for retaining manual control member 30 in its neutral position.

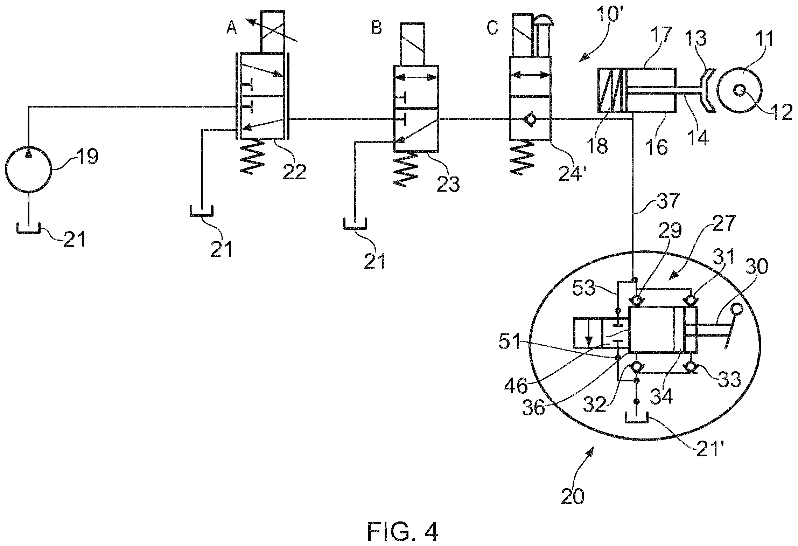

Figure 4 is a schematic depiction of a SAHR brake circuit 10' according to the invention that includes a dual-purpose valve 20. In Figure 4 the majority of the components are the same as in the circuit of Figure 1. The solenoid valve 24' however omits the override element 26 as this function is provided by the control member 30 and brake control valve 46 that do not have direct counterparts in the Figure 1 circuit. Features that have already been described with reference to Figure 1 will not necessarily be described again here.

The dual-purpose valve 20 comprises the brake control valve 46, which is coupled to the movable piston 34. The movable piston is an example of a moveable valve member. In other examples, the manual control member 30, or any suitable control member can be considered as the moveable valve member. The brake control valve 46 is an example of a two-position hydraulic brake control valve. A first bypass channel 53 connects the brake control valve 46 to the brake cylinder 17, in this example via an outlet line 37. A second bypass channel 51 connects the brake control valve 46 to the tank 21'.

Movement of the manual control member 30 controls the brake control valve 46 such it is either in a closed state (as shown in Figure 4), or it is in an open state (not shown in Figure 4). When the brake control valve 46 is in the closed state no fluid can flow between the brake cylinder 17 and the tank 21' through the brake control valve 46. When the brake control valve 46 is in the open state, fluid can flow though the brake control valve 46 from the first bypass channel 53 to the second bypass channel 51. Figure 4 shows a one-way fluid flow through the brake control valve 46 when it is in the open state. However, in some examples no check valves or other fluid flow control components are required to prevent fluid flowing through the brake control valve 46, when it is in the open state, in the wrong direction. Instead an expected pressure difference between the brake chamber 17 and the tank 21' can cause fluid to flow in only one direction when the fluid in the brake chamber 17, which is subjected to a force by the spring 18, is at a higher pressure than fluid in the tank 21'.

When the dual-purpose valve 20 is in a brake activation position, the brake control valve 46 is in the open state such that fluid can drain from the brake cylinder 17 to the tank 21' and the brake can be applied. The manual control member 30 can be moved between a neutral position and a brake deactivation position, with the brake control valve 46 maintained in the closed state, in order to add fluid to the brake cylinder 17 in a similar way to the manually operated fluid pump 27 of Figure 1.

As is apparent from Figure 4 stroking of the handle 38 so it moves in a downward arc (that is schematically illustrated as potential horizontal movement in Figure 4) causes operation of the manually operated pump in like manner to the manually operated pump of Figure 1. Such movement maintains the brake control valve 16 in the closed state. Pulling of the handle 38 in an upward direction relative to the neutral position operates the dual-purpose valve 20 such that the brake control valve 46 is put into the open state and fluid pressure in brake cylinder 17 is exhausted to tank 21'. This exhaustion of pressure from the brake cylinder causes the spring 18 to urge first 11 and second 13 brake elements into mutual engagement.

The manually operated fluid pump 27 in this example has a piston 34 that defines a first brake control chamber and a second brake control chamber on either side of the piston 34, within the brake control cylinder 36. Each of the first brake control chamber and the second brake control chamber is connected to the brake cylinder 17 via the outlet line 37 and a respective one-way check valve 29, 31. The brake control chambers are portions of the brake control cylinder 36 for holding fluid. These one-way check valves 29, 31 enable fluid to flow from the brake control cylinder 36 to the brake cylinder when there is a pressure differential across the valve. Similarly, each of the first brake control chamber and the second brake control chamber is connected to the tank 21' via a respective one-way check valve 32, 33. These one-way check valves 32, 33 enable fluid to flow from the tank 21' in to the brake control cylinder 36 when there is a pressure differential across the valve. Such an arrangement of one-way check valves 29, 31, 32, 33 enables the manually operated fluid pump 27 to be pumped in order to increase the pressure of fluid in the brake cylinder 17, so long as the brake control valve 46 is in a closed state.

### Brake Activation Position

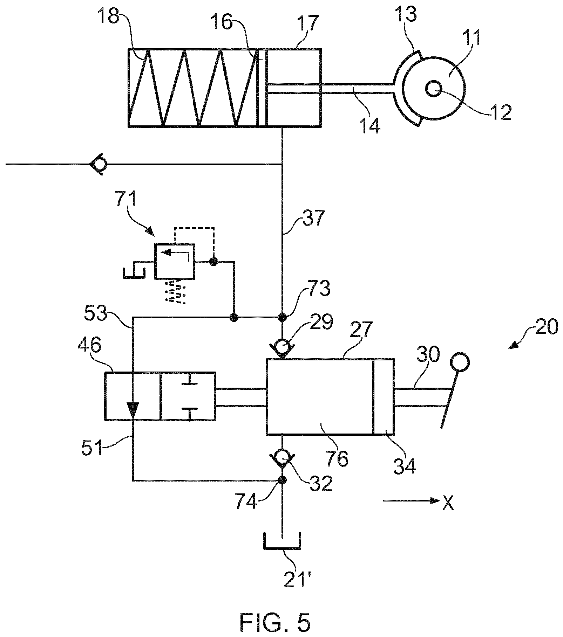

Figure 5 shows a schematic representation of a dual-purpose valve 20 in a brake activation position. The dual-purpose valve 20 is shown as part of a SAHR brake circuit. In this example, in contrast to Figure 4, the piston 34 within the brake control cylinder of the manually operated fluid pump 27 defines only one brake control chamber 76, which is shown to the left of the piston 34.

The manual control member 30 is shown in a brake activation position, which is reached by moving the manual control member 30 in a first direction X. The brake control valve 46 has been put into an open state such that fluid is vented from the brake cylinder 17 to the tank 21' through the outlet line 37, the first bypass line 53, the brake control valve 46 and the second bypass line 51. The fluid in the brake cylinder 17 is caused to flow out of the brake cylinder 17 because it is pressurised by the spring 18 pushing against the piston 14. As fluid flows out of the brake cylinder 17, the piston 14 moves to the right as it is shown in Figure 5 thereby causing mutual engagement of the first 11 and second 13 brake elements.

Brake relief apparatus 71 can be connected to the brake supply line 53 to provide pressure relief on the first bypass line 53 by draining away some of the pressurised fluid to a tank. The brake relief apparatus 71 can be a standard pressure relief valve which relieves the pressure on the first bypass line 53 in order to limit the effort needed on the control side. This can therefore reduce loading of the Bowden cable or other control members when maximum pressure on brake actuator has been reached. In some examples this can prevent overloading.

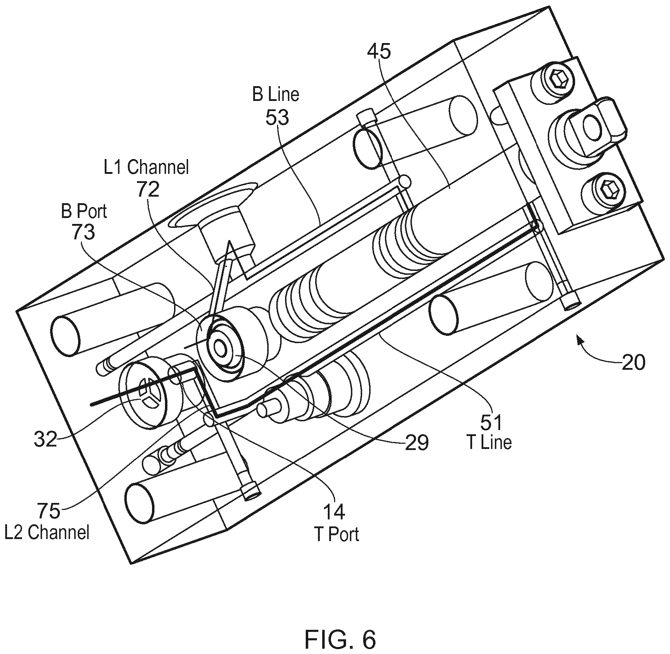

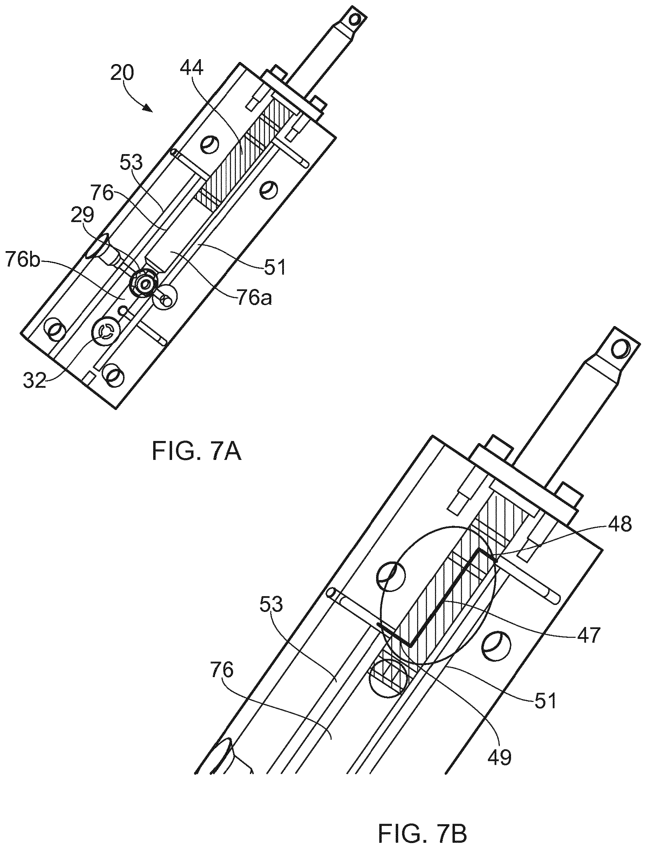

Figure 6 shows the internal structure of an embodiment of the dual-purpose valve 20. The dual-purpose valve 20 provides, as a single component, the functionality of a brake control valve and a manually operated fluid pump. The dual-purpose valve 20 comprises a spool 44, which functions as a piston within a brake control cylinder 45. The position of the spool 44 within the brake control cylinder 45 defines the size of the first brake control chamber 76 (which is more clearly visible in Figures 7A and 7B). As will be described in more detail below, the spool 44 has internal fluid channels that, when the spool 44 is located in a particular position within the brake control cylinder 45, provide a fluid flow path that bypasses the first brake control chamber 76. Such a bypass flow path is illustrated by the brake control valve 46 of Figure 5 being in an open state.

Figure 6 shows that a first end of the first bypass line 53 is connected to a brake port (B-port) 73 via an L1 channel 72. The B-port 73 is a port of the dual-purpose valve 20 that is for connecting to the brake cylinder 17. Reference number 73 is also included in Figure 5 to show the location of a suitable connection point between the dual-purpose valve 20 and the rest of the SAHR circuit. Figure 6 also shows a one-way check valve 29 located between the B-port 73 and the brake control chamber 76. The B-port 73 allows fluid to flow out of the brake cylinder 17 and out of the dual-purpose valve 20 (through the one-way check valve 29), and also allows fluid to flow into the first bypass line 53 from outside of the dual-purpose valve 20. The one-way check valve 29 permits fluid flow from the brake control chamber 76 to the brake port 73, and inhibits fluid flow from the brake port 73 to the brake control chamber 76.

A second end of the first bypass line 53 opens at a surface that defines the brake control cylinder 45. More particularly, it can open at a region of the surface that will always be adjacent to the spool 44 in normal use. This opening can be considered as a first cylinder port. Depending on the position of the spool 44, the second end of the first bypass line 53 is either in fluid communication with the internal fluid channels through the spool 44 or is dead-ended by the spool 44.

Figure 6 also shows that a first end of the second bypass line 51 is connected to a tank port (T-port) 74 via an L2 channel 75. The T-port 74 is a port of the dual-purpose valve 20 that is for connecting to the fluid tank 21'. Reference number 74 is also included in Figure 5 to show the location of a suitable connection point between the dual-purpose valve 20 and the tank 21'. Figure 6 also shows a one-way check valve 32 located between the T-port 74 and the brake control chamber 76. The T-port 74 allows fluid to flow into the brake cylinder 17 from outside of the dual-purpose valve 20 (through the one-way check valve 32), and also allows fluid to flow out of the second bypass line 51 and out of the dual-purpose valve 20. The one-way check valve 32 permits fluid flow from the tank port 74 to the brake control chamber 76, and inhibits fluid flow from the brake control chamber 76 to the tank port 74. That is, the one-way check valve 32 prevents the brake cylinder 17 from being in fluid communication with the second bypass line 51 through L2 channel 75.

A second end of the second bypass line 51 opens at a surface that defines the brake control cylinder 45. More particularly, it can open at a region of the surface that will always be adjacent to the spool 44 in normal use. This opening can be considered as a second cylinder port. Depending on the position of the spool 44, the second end of the second bypass line 51 is either in fluid communication with the internal fluid channels through the spool 44 or is dead-ended by the spool 44.

That is, the first bypass line 53 and the second bypass line 51 are configured to be aligned with the internal fluid channels 47, 48, 49 of the spool 44 when the brake control valve 46 is in an open state; and the first bypass line 53 and the second bypass line 51 are configured to be misaligned with the internal fluid channels 47, 48, 49 of the spool 44 when the brake control valve 46 is in a closed state. The internal fluid channels 47, 48, 49 are put in fluid communication with the first bypass line 53 and the second bypass line 51 when a braking position is reached.

The bypass flow path bypasses the brake control chamber 76 and can permit fluid flow from the brake port 73 to the tank port 74. The internal fluid channels in the spool 44 define at least part of the bypass flow path.

Figures 7A is a front view of the dual-purpose valve 20 in a brake activation position, which in this example is with the spool 44 in a retracted position. Figure 7B shows a close-up of the inner structure of the dual-purpose valve 20 of Figure 7A in cross-section.

It can be seen in Figures 7A and 7B that the brake control chamber 76 has a first portion 76a, with a first width, that extends from the spool 44 to a position that is just before the B-port 73. The brake control chamber 76 then comprises a second portion 76b, with a second width, past the check valves 29, 32 and the associated B-port 73 and T-port 74. The spool 44 is moveable along the first portion 76a. The width of the second portion 76b is narrower than the first portion 76a such that the spool 44 cannot move into the second portion 76b and block either of the B-port 73 and the T-port 74. In some examples, the second portion may comprise any protrusion or other detent that separates the first portion 76a from the second portion 76b and prevents the spool 44 from moving into the second portion 76b, which would block either or both of the B-port 73 and the T-port 74.

Figure 7B shows that when the spool 44 is in the brake activation position, internal fluid channels 48, 47, 49 within the spool 44 provide a fluid flow path between the first bypass line 53 and the second bypass line 51. This fluid flow path bypass the brake control chamber 76. In this example the internal fluid channels comprise a central fluid channel 47 extending longitudinally over part of the length of the spool 44, and near each end of the central fluid channel 47 respective first and second transverse fluid channels 48 and 49, which extend from the central fluid channel 47 and open at an outer surface of the spool 44. The central fluid channel 47 is in fluid communication with each of the transverse fluid channels 48 and 49. The openings at the outer surfaces of the spool can be considered as first and second spool ports that are configured to align with respective first and second cylinder ports when the spool 44 / dual-purpose valve 20 is in the brake activation position.

In this example, the transverse fluid channels 48 and 49, and therefore the associated spool ports at the outer surface of the spool 44, are offset from one another in a longitudinal direction of the spool 44. This offset can provide a seal between the transverse fluid channels 48 and 49 when the spool 44 is in the brake deactivation position, which can advantageously reduce or prevent fluids from leaking from the first bypass line 53 to the second bypass line 51 when the dual-purpose valve 20 is in the brake activation position, which would compromise the brake deactivation function.

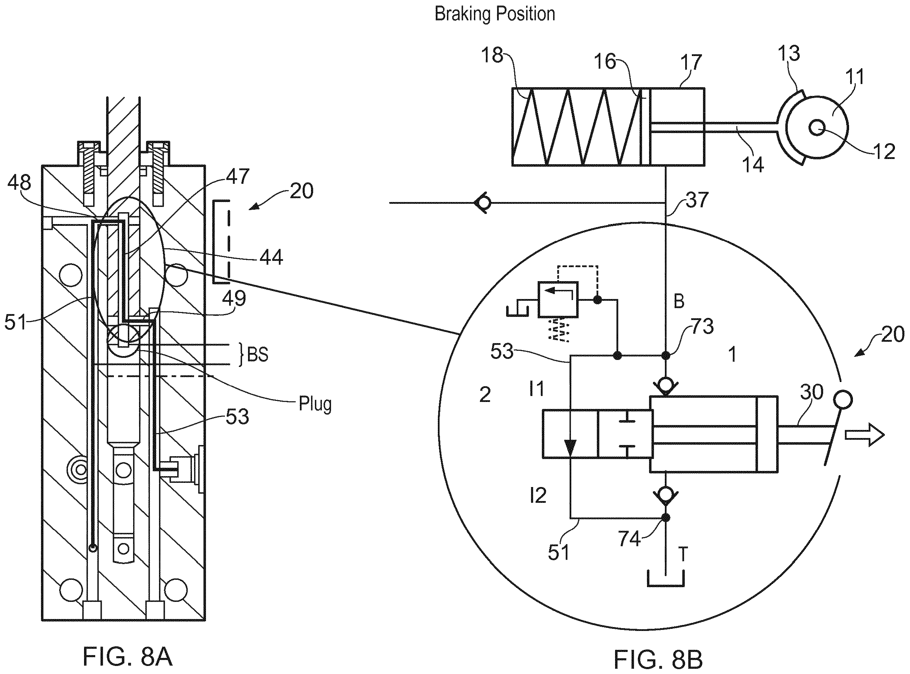

Figure 8A shows a cross-sectional schematic view of the dual-purpose valve 20 of Figures 7A and 7B, also in the brake activation position. As shown, fluid can flow from the brake cylinder 17, through the B-port 73, through the first bypass line 53, through the spool 44 in the dual-purpose valve 20, through the second bypass line 51, through the T-port 74 and in to the tank 21' when the spool 44 is appropriately positioned.

The movement distance BS required to achieve this is in the preferred embodiment of the invention as illustrated 14 mm. In other embodiments however longer or shorter movement distances may be possible.

In Figures 8A and 8B, the brake cylinder 17 is connected to the tank 21'. The position of the spool 44 in the braking position can be one that achieves the maximum opening, or a sufficiently large opening, of the channel between the brake cylinder 17 and the tank 21'. The channel opening can be proportionally modular by mechanical control of the position of the spool 44.

### Neutral Position

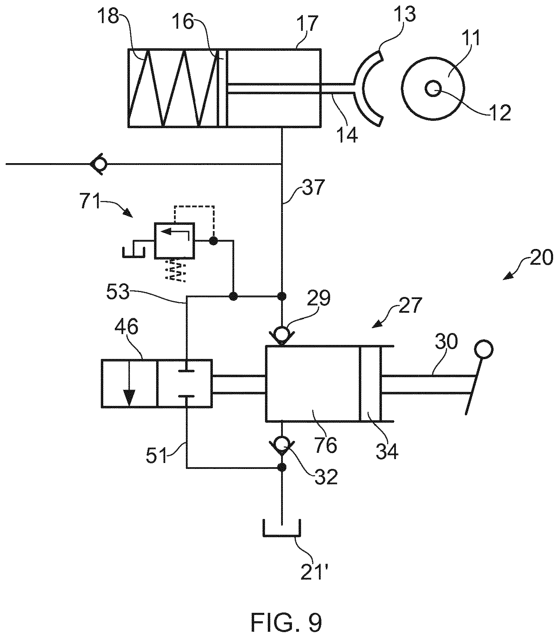

Figure 9 shows in schematic form the dual-purpose valve 20 in a neutral position. The dual-purpose valve 20 is shown as part of a SAHR brake circuit. In the neutral position, the brake control valve 46 is in a closed state; there is no fluid flow between the brake cylinder 17 and the tank 21' through the brake control valve 46.

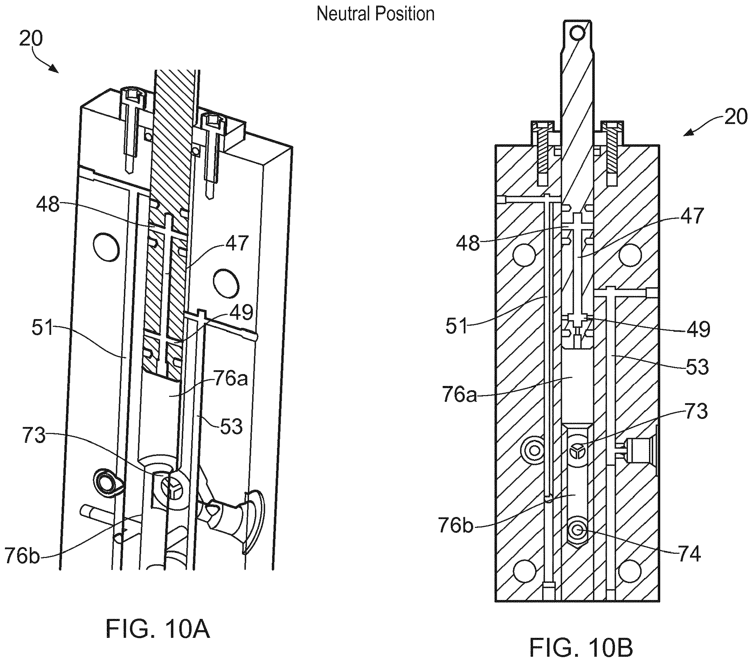

Figures 10A and 10B show the inner structure of the dual-purpose valve 20 when in a neutral position. The spool 44 has been moved partially, but not entirely, along the first portion 76a of the brake control chamber 76. The spool 44 is in a position whereby transverse fluid bores 48 and 49 are not in line with the second bypass channel 51 and the first bypass channel 53 respectively. That is, the first and second spool ports are not aligned with respective first and second cylinder ports. Therefore, there is no fluid flow path that bypasses the brake control chamber 76. In the neutral position of the spool 44, and indeed all positions of the spool 44, the B-port 73 and the T-port 74 open into the brake control chamber 76 via respective one-way check valves 29, 32.

The neutral position can be considered as any position that does not provide a bypass fluid flow path between the brake cylinder 17 and the tank 21'. In the neutral position, the first bypass channel 53 is not connected to the second bypass channel 51.

As will be discussed below, moving the piston / spool 44 downwards from the neutral position can operate the system as a hand pump.

### Brake Deactivation Position

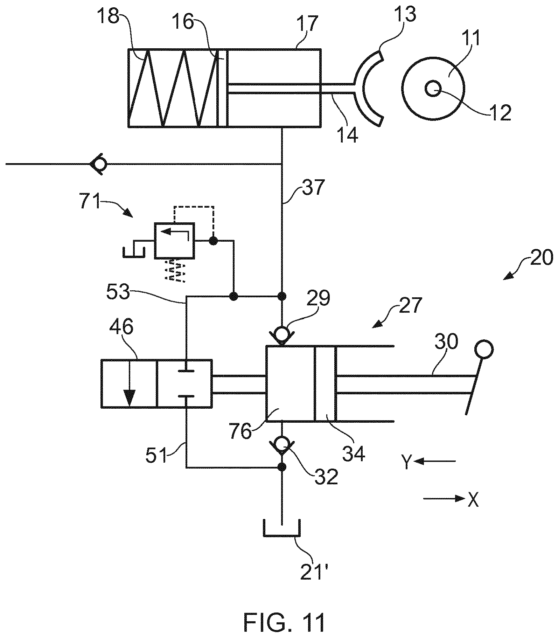

Figure 11 shows in schematic form the dual-purpose valve 20 in a brake deactivation position. The dual-purpose valve 20 is shown as part of a SAHR brake circuit.

In the neutral position, as described above, the brake control valve 46 is in a closed state such that there is no fluid flow between the brake cylinder 17 and the tank 21' through the brake control valve 46. When the manual control member 30 moves in a second direction Y, in order to reduce the volume of the brake control chamber 76, the dual-purpose valve 20 can be said to be moved towards a brake deactivation position. The brake control valve 46 remains in the closed state in the brake deactivation position.

As the manual control member 30 moves in the second direction Y, fluid is pumped from the brake control chamber 76 into the brake cylinder 17, which increases the force acting on the piston 16 against the spring 18. If the increase in force is sufficient, then the first 11 and second 13 brake elements are moved apart and the brake is disengaged. If the increase in force is not sufficient to disengage the brake, then the manual control member 30 can be moved back in the first direction X (but not as far as the brake activation process), in order to draw additional fluid into the brake control chamber 76 from the tank 21'. Then the manual control member 30 can be moved back in the second direction Y in order to pump further fluid from the brake control chamber 76 into the brake cylinder 17. This pumping action of moving the manual control member 30 back and forth in the X and Y directions can be repeated as many times as is required.

An example pump stroke distance between the neutral position and the brake deactivation position is 43 mm. In other embodiments however longer or shorter movement distances may be possible.

It will be appreciated from the above description that movement of the piston 34 in a first direction towards a brake deactivation position from a neutral position maintains the brake control valve 46 in a closed state, and causes pressurised fluid flow from the brake control chamber 76 to the brake port 73, thereby disengaging the braking system. Also, movement of the piston 34 in a second direction towards a brake activation position from the neutral position alters the brake control valve 46 from a closed state to an open state, and permits pressurised fluid flow from the brake port 73 to the tank port 74 through the dual-purpose valve 20, thereby engaging the braking system. Further still, movement of the piston 34 from the brake activation position towards the neutral position causes pressurised fluid flow from the tank port 74 in to the brake control chamber 76.

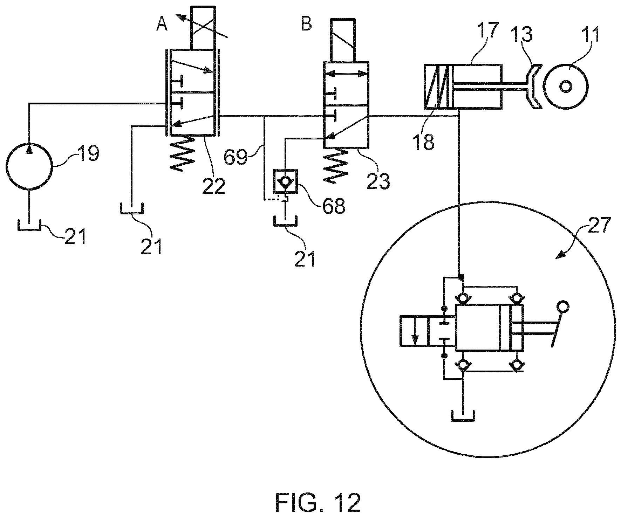

Figure 12 shows in schematic form a variant on the Figure 4 circuit that nonetheless embodies the principles of the invention. The hydraulic circuit of Figure 7 differs from that of Figure 4 in that valve 24' is dispensed with, such that valve 23 supplies pressurised fluid directly to the brake cylinder 17.

The function of valve 24' is assumed by a one-way check valve 68 connected in line in the drain line from valve 23 to tank 21.

Check valve 68 normally prevents fluid flow from valve 23 to tank 21 but is piloted by pressurised fluid from valve 22 when the latter connects pump 19 in circuit. At this time check valve 68 is caused by pressure in pilot line 69 to open with the result that when valve 23 is configured to connect cylinder 17 to the drain 21 venting of pressurised fluid from the valve 17 becomes possible.

In Figure 12 the manually operated pump 27, manual control member 30 and related components are as described with reference to Figure 4.

As noted, numerous variants on the arrangement of the invention are possible within the scope of the invention, in accordance with the primary principle of providing a dual-purpose manual control member that is connected to operate both a brake control valve and a manually operated pump depending on the motion of the manual control member. Also, various variants to the dual-purpose valve described herein are possible.

The components of preferred embodiments of the invention may be manufactured from a range of materials that will be familiar to the person of skill in the art.

The listing or discussion of an apparently prior-published document in this specification should not necessarily be taken as an acknowledgement that the document is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. A hydraulic brake actuator comprising a manual control member (30) and a moveable valve member (44), wherein the manual control member (30) is moveable between on the one hand a control member neutral position and a control member-defined brake activation position and on the other hand the control member neutral position and a control member-defined brake deactivation position, the manual control member (30) being operatively connected to a brake control valve (46), the moveable valve member (44) of which is moveable between on the one hand a valve neutral position (N) and a brake activation position (B) and on the other hand the valve neutral position (N) and a brake deactivation position (P), wherein the manual control member (30) being in the control member neutral position corresponds to the moveable valve member (44) being in the valve neutral position (N), wherein the manual control member (30) is a pivotable lever (38) that is pivotably secured at one end to a pivot (41) forming part of a vehicle; and that defines a free end (39) that is capable of being manually gripped,and wherein the pivotable lever (38) is pivotable relative to a cam plate (56) defining a cam surface (58'); and wherein the pivotable lever (38) includes a cam follower (59) that is moveable relative to the lever (38) and that follows the cam surface (58')
**characterised in that** the cam surface (58') includes one or more slots (58) formed in the cam plate (56); and the pivotable lever (38) includes a resiliently deformable biasser (63) that biases the follower (59) into engagement with the cam surface (58').

2. A hydraulic brake actuator according to Claim 1 including a link member (43) operatively interconnecting the manual control member (30) and the brake control valve (46).

3. A hydraulic brake actuator according to Claim 2 wherein the link member (43) is or includes a Bowden cable.

4. A hydraulic brake actuator according to Claim 1 wherein the cam surface (58') includes one or more recesses (67) in which the cam follower (59) is receivable, movement of the pivotable lever (38) being inhibited when the cam follower (59) is received in a said recess (67).

5. A hydraulic brake actuator according to Claim 4 wherein a said recess (67) lies part-way along the cam surface (58'), movement of the follower (59) along the cam surface (58') to a first side of the recess defining movement of the manual control member (37) between the control member neutral position and a control member-defined brake activation position; and movement of the follower (59) along the cam surface (58') to a second side of the recess (67) defining movement of the manual control member (37) between the control member neutral position and a control member-defined brake deactivation position.

6. A hydraulic brake actuator according to Claim 5 wherein the length of movement of the cam follower (59) along the cam surface (58') to the said first side is approximately 14 mm; and wherein movement of the cam follower (59) along the cam surface (58') to the said second side is approximately 34 mm.

7. A hydraulic brake actuator according to any of Claims 4 to 6 wherein at least one said recess (67) is defined by a space between protrusions (64, 66) protruding from the cam surface.

8. A hydraulic brake actuator according to Claim 1 wherein the pivot (41) is formed in the cam plate (56).

9. A hydraulic brake actuator according to any preceding claim wherein movement of the valve member (44) of the brake control valve (46) between the neutral position (N) and the brake deactivation position (P) if effected repeatedly pumps hydraulic fluid in order to deactivate a brake that is operatively connected to the brake control valve (46).

10. A hydraulic brake actuator according to claim 6 and claim 7 to 9 wherein the pivotable lever (38) includes a manually operated release (39) for causing removal of the cam follower (59) from a said recess (67) and that acts in opposition to the biasser (63).

## Patentansprüche

1. Hydraulischer Bremsaktuator umfassend ein manuelles Steuerelement (30) und ein bewegliches Ventilelement (44), wobei das manuelle Steuerelement (30) einerseits zwischen einer neutralen Stellung des Steuerelements und einer durch das Steuerelement definierten Bremsen-Aktivierungsstellung und andererseits zwischen der neutralen Stellung des Steuerelements und einer durch das Steuerelement definierten Bremsen-Deaktivierungsstellung bewegbar ist, wobei das manuelle Steuerelement (30) wirkend mit einem Bremsen-Steuerventil (46) verbunden ist, wobei das bewegliche Ventilelement (44) desselben einerseits zwischen einer neutralen Stellung (N) des Ventils und einer Bremsen-Aktivierungsstellung (B) und andererseits zwischen der neutralen Stellung (N) des Ventils und einer Bremsen-Deaktivierungsstellung (P) bewegbar ist, wobei das manuelle Steuerelement (30) in der neutralen Stellung des Steuerelements dem beweglichen Ventilelement (44) in der neutralen Stellung (N) des Ventils entspricht, wobei das manuelle Steuerelement (30) ein schwenkbarer Hebel (38) ist, der an einem Ende schwenkbar an einem Drehpunkt (41) angebracht ist, der Teil eines Fahrzeugs bildet; und der ein freies Ende (39) definiert, das dazu geeignet ist, manuell ergriffen zu werden, und wobei der schwenkbare Hebel (38) relativ zu einer Kurvenscheibe (56) schwenkbar ist, die eine Kurvenfläche (58') definiert; und wobei der schwenkbare Hebel (38) einen Kurvenfolger (59) umfasst, der relativ zum Hebel (38) bewegbar ist und der Kurvenfläche (58') folgt
**dadurch gekennzeichnet, dass** die Kurvenfläche (58') einen oder mehrere Schlitze (58) umfasst, die in der Kurvenscheibe (56) ausgebildet sind; und der schwenkbare Hebel (38) ein elastisch verformbares Vorspannelement (63) umfasst, das den Kurvenfolger (59) in Eingriff mit der Kurvenfläche (58') vorspannt.

2. Hydraulischer Bremsaktuator nach Anspruch 1, umfassend ein Verbindungselement (43), das das manuelle Steuerelement (30) und das Bremsen-Steuerventil (46) wirkend miteinander verbindet.

3. Hydraulischer Bremsaktuator nach Anspruch 2, wobei das Verbindungselement (43) ein Bowdenzug ist oder einen solchen umfasst.

4. Hydraulischer Bremsaktuator nach Anspruch 1, wobei die Kurvenfläche (58') eine oder mehrere Aussparungen (67) umfasst, in die der Kurvenfolger (59) aufnehmbar ist, wobei eine Bewegung des schwenkbaren Hebels (38) unterbunden wird, wenn der Kurvenfolger (59) in einer Aussparung (67) aufgenommen ist.

5. Hydraulischer Bremsaktuator nach Anspruch 4, wobei die Aussparung (67) auf einem Teil des Wegs entlang der Kurvenfläche (58') liegt, wobei eine Bewegung des Kurvenfolgers (59) entlang der Kurvenfläche (58') auf eine erste Seite der Aussparung eine Bewegung des manuellen Steuerelements (37) zwischen der neutralen Stellung des Steuerelements und einer durch das Steuerelement definierten Bremsen-Aktivierungsstellung definiert; und eine Bewegung des Kurvenfolgers (59) entlang der Kurvenfläche (58') auf eine zweite Seite der Aussparung (67) eine Bewegung des manuellen Steuerelements (37) zwischen der neutralen Stellung des Steuerelements und einer durch das Steuerelement definierten Bremsen-Deaktivierungsposition definiert.

6. Hydraulischer Bremsaktuator nach Anspruch 5, wobei die Länge der Bewegung des Kurvenfolgers (59) entlang der Kurvenfläche (58') auf die erste Seite etwa 14 mm beträgt; und wobei die Bewegung des Kurvenfolgers (59) entlang der Kurvenfläche (58') auf die zweite Seite etwa 34 mm beträgt.

7. Hydraulischer Bremsaktuator nach einem der Ansprüche 4 bis 6, wobei zumindest eine Aussparung (67) durch einen Raum zwischen Vorsprüngen (64, 66) definiert ist, die von der Kurvenfläche hervorragen.

8. Hydraulischer Bremsaktuator nach Anspruch 1, wobei der Drehpunkt (41) in der Kurvenscheibe (56) ausgebildet ist.

9. Hydraulischer Bremsaktuator nach einem der vorangehenden Ansprüche, wobei eine Bewegung des Ventilelements (44) des Bremsen-Steuerventils (46) zwischen der neutralen Stellung (N) und der Bremsen-Deaktivierungsstellung (P), wenn sie ausgeführt wird, wiederholt Hydraulikfluid pumpt, um eine Bremse zu deaktivieren, die wirkend mit dem Bremsen-Steuerventil (46) verbunden ist.

10. Hydraulischer Bremsaktuator nach Anspruch 6 und Ansprüchen 7 bis 9, wobei der schwenkbare Hebel (38) eine manuell betätigte Freigabeeinrichtung (39) zum Bewirken des Entfernens des Kurvenfolgers (59) aus der Aussparung (67) umfasst, die dem Vorspannelement (63) entgegen wirkt.

## Revendications

1. Actionneur de frein hydraulique comprenant un organe manuel de commande (30) et un élément de soupape mobile (44), dans lequel l'organe manuel de commande (30) peut être déplacé entre d'une part, une position neutre de l'organe de commande et une position d'activation des freins de l'organe de commande et d'autre part, la position neutre de l'organe de commande et une position de désactivation des freins de l'organe de commande, l'organe manuel de commande (30) étant relié fonctionnellement à un répartiteur de freinage (46), l'élément de soupape mobile (44) pouvant être déplacé entre d'une part, une position neutre de soupape (N) et une position d'activation des freins (B) et d'autre part, la position neutre de soupape (N) et une position de désactivation des freins (P), dans lequel l'organe manuel de commande (30) se trouvant dans la position neutre de l'organe de commande correspond à l'élément de soupape mobile (44) étant dans la position neutre de soupape (N), dans lequel l'organe manuel de commande (30) est un levier pivotant (38) qui est fixé de façon pivotante à une extrémité à un pivot (41) faisant partie d'un véhicule ; et qui définit une extrémité libre (39) qui peut être saisie manuellement, et dans lequel le levier pivotant (38) peut pivoter par rapport à un disque à cames (56) définissant une surface de came (58') ; et dans lequel le levier pivotant (38) comprend un galet suiveur (59) qui peut être déplacé par rapport au levier (38) et qui suit la surface de came (58')
**caractérisé en ce que** la surface de came (58') comprend une ou plusieurs fentes (58) formées dans le disque à cames (56) ; et le levier pivotant (38) comprend un élément de sollicitation élastiquement déformable (63) qui influence le suiveur (59) pour être en prise avec la surface de came (58').

2. Actionneur de frein hydraulique selon la revendication 1, comprenant un élément de liaison (43) interconnectant fonctionnellement l'organe manuel de commande (30) et le répartiteur de freinage (46).

3. Actionneur de frein hydraulique selon la revendication 2, dans lequel l'élément de liaison (43) est ou comprend un câble Bowden.

4. Actionneur de frein hydraulique selon la revendication 1, dans lequel la surface de came (58') comprend une ou plusieurs cavités (67) dans lesquelles le galet suiveur (59) vient se loger, le mouvement du levier pivotant (38) étant inhibé lorsque le galet suiveur (59) se trouve dans ladite cavité (67).

5. Actionneur de frein hydraulique selon la revendication 4, dans lequel ladite cavité (67) se trouve à mi-chemin le long de la surface de came (58'), le mouvement du suiveur (59) le long de la surface de came (58') vers un premier côté de la cavité définissant le mouvement de l'organe manuel de commande (37) entre la position neutre de l'organe de commande et une position d'activation des freins de l'organe de commande ; et le mouvement du suiveur (59) le long de la surface de came (58') vers un deuxième côté de la cavité (67) définissant le mouvement de l'organe manuel de commande (37) entre la position neutre de l'organe de commande et une position de désactivation des freins de l'organe de commande.

6. Actionneur de frein hydraulique selon la revendication 5, dans lequel la longueur du mouvement du galet suiveur (59) le long de la surface de came (58') vers ledit premier côté est d'environ 14 mm ; et dans lequel le mouvement du galet suiveur (59) le long de la surface de came (58') vers ledit deuxième côté est d'environ 34 mm.

7. Actionneur de frein hydraulique selon l'une quelconque des revendications 4 à 6, dans lequel au moins ladite cavité (67) est définie par un écart entre des protubérances (64, 66) dépassant de la surface de came.

8. Actionneur de frein hydraulique selon la revendication 1, dans lequel le pivot (41) est formé dans le disque à cames (56).

9. Actionneur de frein hydraulique selon l'une quelconque des revendications précédentes, dans lequel le mouvement de l'élément de soupape (44) du répartiteur de freinage (46) entre la position neutre (N) et la position de désactivation des freins (P), si effectué de façon répétée, pompe du fluide hydraulique pour désactiver un frein qui est relié fonctionnellement au répartiteur de freinage (46).

10. Actionneur de frein hydraulique selon la revendication 6 et les revendications 7 à 9, dans lequel le levier pivotant (38) comprend un mécanisme de déverrouillage manuel (39) pour enlever le galet suiveur (59) de ladite cavité (67) et qui agit en opposition avec l'élément de sollicitation (63).
